Europäisches Patentamt

European Patent Office

Office européen des brevets

(11) Publication number: 0 652 655 A1

## EUROPEAN PATENT APPLICATION

(21) Application number: 93203086.9

(22) Date of filing: 04.11.93

(51) Int. Cl.6: H04J 3/06, H04J 14/08

(43) Date of publication of application:
10.05.95 Bulletin 95/19

(84) Designated Contracting States:
BE DE ES FR GB IT NL SE

(71) Applicant: BELL TELEPHONE MANUFACTURING COMPANY NAAMLOZE VENNOOTSCHAP
Francis Wellesplein 1
B-2018 Antwerpen (BE)

(72) Inventor: van de Voorde, Ingrid Zulma Benoit
Bunderdreef 4
B-1700 Dilbeek (BE)
Inventor: Sierens, Christiaan Hendrik Jozef
Marie Josélaan 59
B-2600 Berchem (BE)

(54) Transmission system.

(57) The transmission system includes a main station (MS) and a plurality of substations (SS1, .., SS16) which are each coupled to that main station via a respective individual link (l1/l16) and a common link (lc) and wherein first and second information packets are transmitted from substation transmitters (STR) to a main station receiver (MREC) and from a main station transmitter (MTR) to substation receivers (SREC) respectively. The main station includes a transmission timer arrangement (TTM) to time the operation of the main station transmitter and of each of the substation transmitters to avoid concurrent receipt by each one of the substation receivers of a second information packet sent thereto and of disturbing packets resulting from a first information packet sent by the corresponding substation transmitter. These disturbing packets can be reflected first packets or can result from crosstalk between the substation transmitter and the corresponding substation receiver.

FIG. 1

The present invention relates to a transmission system including a main station and a plurality of substations which are each coupled to said main station via a respective individual link and a common link and wherein first and second information packets are transmitted from substation transmitters to a main station receiver and from a main station transmitter to substation receivers respectively.

Such a transmission system is already known in the art, e.g. from the *Published European Patent Application No. 91870197.0-229 with publication No. 0544975*. The transmission system described therein is an optical system where the first and second information packets are transmitted in duplex mode, i.e. at the same time in both directions over the common and the individual links. In case first information packets emitted by a substation are reflected during their travel along the mentioned links and are thus received in this substation, the contents of second information packets received in this substation at the same time may be affected when the reflected packets are relatively important. These reflections may be caused by network elements such as couplers and splitters provided at the junction of the common and the individual links. Especially reflections produced by network elements located close to a receiver may affect received second information packets because the reflected first packets are then not or poorly attenuated. On the contrary network elements located for example between the splitter and the main station have a smaller adverse effect in the substation because of the attenuation produced in the splitter.

In a similar way, the transmission of first information packets by the substation transmitters can cause crosstalk which, when relatively important, can negatively influence the receipt of second information packets by the related substation receivers.

Obviously, the adverse effect of the above disturbing packets, i.e. the reflected packets or packets resulting from crosstalk, could be minimized by considerably attenuating them. However, this usually implies that the first and second information packets are attenuated as well.

Another way of avoiding the negative effect of reflections or crosstalk is to work in ping-pong mode, i.e. by using a protocol which realizes that a substation never sends first information packets when the main station is sending second information packets and vice versa. However, this considerably reduces the bandwidth available on the links.

An object of the present invention is to provide a transmission system of the above known type but wherein the adverse effect of the disturbing packets at the substation side is avoided without thereby attenuating the first and second information packets, or reducing the available bandwidth.

According to the invention, this object is achieved due to the fact that said main station includes a transmission timer means to time the operation of said main station transmitter and of each of said substation transmitters to avoid concurrent receipt by said substation receiver of said second information packets transmitted thereto and of disturbing packets resulting from said first information packets transmitted by a corresponding one of said substation transmitters.

In this way, second information packets destined for a substation and reaching that substation can not be adversely affected by disturbing packets resulting from first information packets sent by the latter substation.

Another characteristic feature of the present invention is that each of said substation transmitters is able to transmit said first information packets in dedicated time slots and that said main station includes a management module which controls said transmission timer means and is able to dynamically allocate said dedicated time slots to each of said substations, said management module generating grant packets indicative of said dedicated time slots and supplying said grant packets to said main station transmitter which transmits them to said substations to inform them about the time slots allocated.

As a result, the main station and more specifically the management module, has knowledge about the instants at which first information packets can be sent by the substations, and provided the time intervals during which disturbing packets can be received are predetermined, the main station can based on this knowledge determine when the second information packets may be sent to the substations, or it can by inhibiting the sending of grant packets avoid the sending of first information packets as long as resulting disturbing packets would adversely affect the receipt of second information packets.

Yet another characteristic feature of the present invention is that said transmission timer means includes for each of said substations a timer circuit to indicate time intervals during which said substation may receive said disturbing packets and an inhibiting means controlled by said timer circuit to inhibit the operation of said main station transmitter so as to prevent second information packets from reaching said substation during said time intervals and that said transmission timer means further includes for each of said substations a plurality of second timer circuits each able to indicate second time intervals elapsing between the receipt of said grant packets by the receiver of said substation and the possible subsequent sending of a said first information packet by the transmitter of said substation, said second timer circuits being controlled by a control module connected to said management module to start each in turn a said second time interval, a said second time interval being started each time a said grant packet is sent to said substation by said main station transmitter, and each of said second timer circuits controlling the first mentioned timer circuit for said substation to start a said first mentioned time interval when any said second interval timed by said second timer circuits has elapsed.

In this way, each of the second timer circuits reaches the end of its second time interval a predetermined time interval before the associated substation may start sending a first information packet. This predetermined time interval equals the transmission delay of the grant signal over the common and the related dedicated link. At the instant the end of the second time interval is reached the inhibiting means has to be activated to inhibit transmission of second information packets. The first timer circuit indicates how long in time, disturbing packets resulting from sent first information packets can occur. At the end of the first time interval the inhibiting means may be deactivated and second information packets may again be transmitted to the associated substation since they will reach the substation the above mentioned predetermined time interval later, when no more disturbing packets can reach the substation.

In another embodiment the transmission timer means includes for each of said substations a timer circuit to indicate time intervals during which said substation may receive said disturbing packets, a register arrangement for delaying said second information packets during a first predetermined time interval prior to transmission, a control means connected to said register circuit, to generate a control signal which is active when a grant packet may be transmitted, said control signal being active during a second predetermined time interval and an inhibiting means controlled by said control signal and by said timer circuit to inhibit the operation of said main station transmitter so as to prevent grant packets to be sent to said substation as long as disturbing packets resulting from the receipt by said substation of a said grant signal might concur with second information packets destined for said substation upon receipt thereof by said substation. It further includes for each of said substations a second timer circuit to indicate second time intervals elapsing between the receipt of said grant packets by the receiver of said substation and the possible subsequent sending of a said first information packet by the transmitter of said substation, said second timer circuit being controlled by a control module connected to said management module to start a said second time interval each time a said grant packet is sent to said substation by said main station transmitter, and said second timer circuit controlling the first mentioned timer circuit for said substation to start a said first mentioned time interval when any said second time interval timed by said second timer circuits has elapsed.

In this embodiment the grant signals are not sent as long as they can result in disturbing packets which could adversely affect the second information packets which are always transmitted.

The above mentioned and other objects and features of the invention will become more apparent and the invention itself will be best understood by referring to the following description of an embodiment taken in conjunction with the accompanying drawings wherein :

Fig. 1 shows a transmission system according to the present invention;

Fig. 2 represents the transmission timer arrangement TTM of Fig. 1 in more details; and

Fig. 3 shows another embodiment of TTM of Fig. 1.

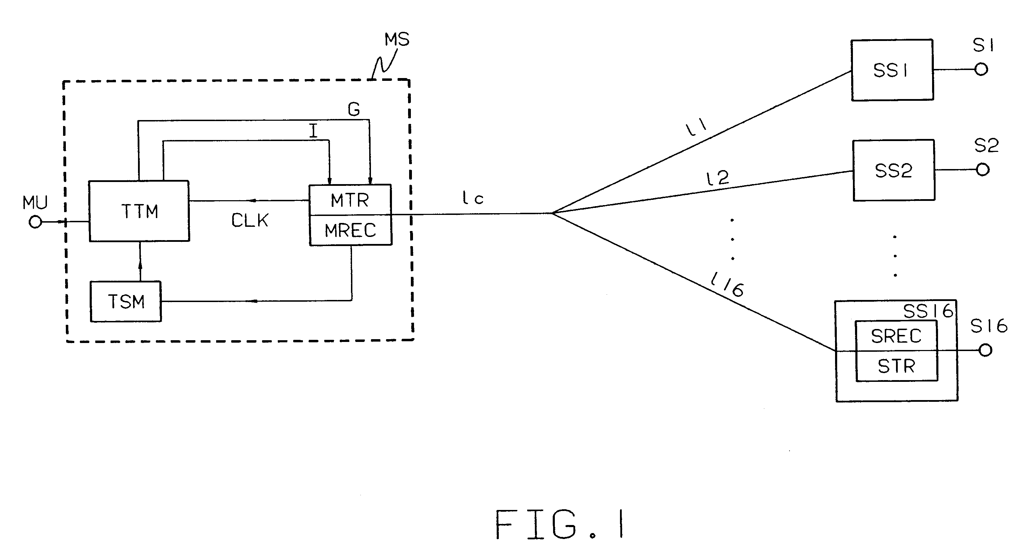

The transmission system of Fig. 1 is an Asynchronous Transfer Mode (ATM) Passive Optical Network (APON), wherein first information packets are transmitted at a rate of 155 MegaBits Per Second (MBPS) from substation transmitters of 16 substations SS1 to SS16, to which respective subscribers S1 to S16 (not shown) are connected via like named terminals, to a receiver MREC of a main station MS, to which a main user MU (also not shown) is connected via a terminal MU. Only one substation transmitter, i.e. STR for SS16, is represented in Fig. 1.

The first information packets are transmitted over respective dedicated links l1 to l16 and over a common link lc, in dedicated timeslots allocated to the substations by the main station MS. More specifically, the time slots are allocated by a Time Slot Management system TSM provided in the main station MS and the substations are informed about this allocation by means of grant packets sent by the main station to the substations. As a result of such a grant packet a substation for which the grant packet is intended, will upon receipt thereof start transmission of a first information packet after a predetermined time interval. This interval is equal to the sum of the equalization delay of the substation and of the processing delay thereof. The equalization delay is the time interval the substation has to wait for before sending a first information packet after receipt of a grant packet in order to avoid collisions of first information packets sent by the different substations when accessing lc. More details about the equalization delay and the measurement thereof can be found in the *published European Patent Application 91201355.4 published under the number 0521197A1*.

Second information packets are at a speed of 622 Mbps, sent from a main station transmitter MTR to substation receivers of which again only one receiver, i.e. SREC for SS16 is represented in Fig. 1.

A PON system as above and the time slot management system are described in detail in the first mentioned European Patent Application.

The main station MS also includes a transmission timer arrangement TTM which is controlled by TSM and by a clock signal CLK generated by MTR and to which MU is connected. CLK is derived from the filling rate of a buffer (not shown) in MTR which buffers the to be transmitted second information packets. TTM provides grant packets G from TSM and information packets I from MU to MTR. The latter packet are combined to form the second information packets. When a grant packet has to be transmitted and no information packet is available, then the grant packet is combined with an empty information packet and vice versa.

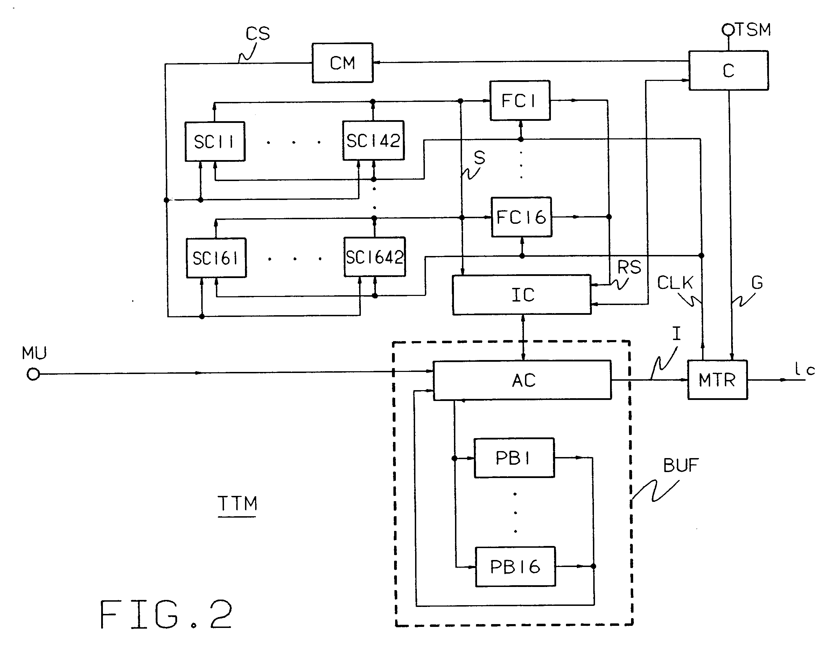

As shown in Fig. 2, TTM comprises 16 X 42 second timer circuits, SC11 to SC1642, which are arranged in groups of 42 circuits dedicated to the 16 substations SS1 to SS16. For instance SC11 to SC142 are dedicated to SS1 and SC161 to SC1642 are dedicated to SS16. It also comprises 16 first timer circuits, FC1 to FC16, one for each substation and for each group of second timer circuits, such as FC1 for SS1 and for SC11 to SC142, and FC16 for SS16 and for SC161 to SC1642, each second timer circuit of a group controlling a respective first timer circuit by means of a signal S which also controls an inhibiting circuit IC.

The reason for having 42 second timer circuits for each substation will be explained later.

All timer circuits are controlled by the clock signal CLK and the second timer circuits are additionally controlled by a control signal CS provided by a control module CM which in its turn is controlled by TSM. The inhibiting circuit IC is also controlled by a control signal RS generated by each of the first time circuits FC1 to FC16 and which is applied to IC via a connection RS.

IC is via a two way connection coupled to an address checking unit AC of a buffer arrangement BUF which additionally includes 16 buffer circuits PB1 to PB16 allocated to the substations SS1 to SS16 respectively. An output of AC is connected to the inputs of these buffer circuits, whilst the outputs of the latter circuits are connected to an input of AC.

The first timer circuits are each able to indicate a first time interval for the associated substation during which first information packets sent by that substation may be reflected to the latter substation, whilst the second timer circuits each indicate for the related substation a second time interval elapsing between the receipt of a grant packet received by that substation and the possible subsequent sending of a first information packet. This second time interval corresponds to the sum of the equalization delay and of the processing delay of the substation.

The inhibiting circuit IC is a memory module (not shown) wherein a busy/free status is stored for each of the substations.

The control module C includes a buffering arrangement (not shown) similar to BUF.

Following is now with reference to Figs. 1 and 2, a description of the working of the transmission system.

Each time C allows a grant packet generated by TSM to be passed to MTR for transmission, this is indicated to CM which converts the given information to the control signal CS indicating to which substation the grant signal will be sent.

How, and based on which criteria C allows a grant packet to be passed to MTR is explained later.

In the following it is assumed that a grant signal is to be sent to SS16.

Upon receipt of a signal from C indicating that a grant signal is sent to SS16, CM starts by means of the signal CS a predetermined one of the second timer circuits SC161 to S1642 based on a round robin protocol. When one of these second timer circuits indicates that the end of the second time interval is reached, this indication is by means of the earlier mentioned control signal S applied to IC, which sets the status of SS16 to busy. At the same time S is sent to FC16 to start it. After having reached the end of the first time interval the latter circuit sends the signal RS to IC indicating thereby that the first timer interval has elapsed for SS16. IC then resets the status of SS16 to free. In this way, the busy status of a substation indicates that first information packets sent by that substation may be reflected to the latter station. Since these reflections can cause degradation of second information packets received at the same moment by that station, the main station has to avoid sending second information packets to a substation as long as its status is busy. Once the status of a substation becomes free, second information packets may again be sent to that substation. They will reach the latter substation after a time interval equal to the transmission time interval, at a moment no reflections can reach the substations any more.

To be noted that as long as the end of the second interval is not reached by a second timer circuit, second information packets and thus also grant packets may be sent to the corresponding substation. For this reason the second timer circuit has to include at least as many second timer circuits as the amount of grant packets which can be sent during the latter time interval. It can be calculated that for the subject transmission system this amount equals 42. For this reason 42 second timer circuits are foreseen.

Whenever MU passes an information packet to AC for transmission, this packet is stored in a (not shown) internal buffer thereof. AC includes an internal clock (also not shown) at the internal rate of which packets to be transmitted are passed to MTR as signal I, provided the status of the destination subscriber is free. At each clock pulse of the internal clock, AC checks whether packets are stored in PB1 to PB16. When this is the case a packet is retrieved according to a round-robin protocol and passed to MTR. When no packets are stored in PB1 to PB16, the packet stored in the internal buffer, when there is such a packet present, is passed to MTR. MTR then transmits at the rate of a transmission clock (not shown) the thus retrieved packet, together with a grant packet if one is available, to SS16.

The grant packets have to be handled in the same way as the second information packets to avoid degradation thereof, upon receipt by a substation, due to reflections of first information packets received at the same time. More specifically, as long as a substation is in its busy status, a grant packet intended for that substation has to be buffered. Therefore, C includes a buffering arrangement (not shown), which is similar to BUF, an in/from which grant packets are buffered/retrieved in a way similar to the packets sent by MU. Therefore C has to check in IC the status of the destination substation each time a grant packet is to be sent by TSM.

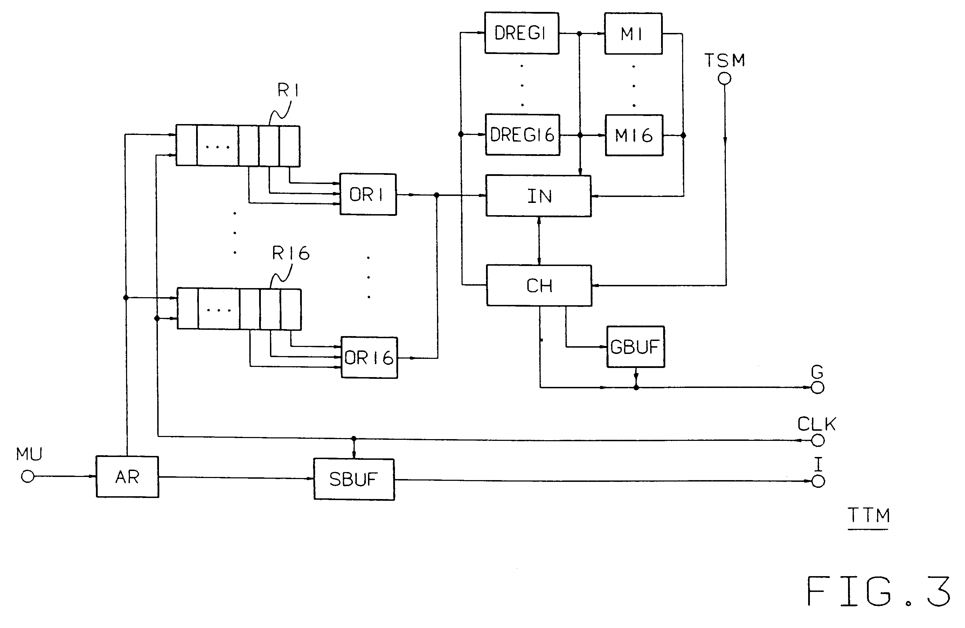

A second embodiment of TTM is shown in Fig. 3. It includes an address reading module AR to an input of which MU is coupled and which has two outputs, one connected to 16 shift registers, R1 to R16, and one connected to a buffer SBUF. SBUF as well as R1 to R16 are controlled by CLK. SBUF generates I.

The three last elements of each of the shift registers are connected to a respective ORing arrangement OR1/OR16, which generates a control signal for an inhibiting circuit IN.

IN is also controlled by the output signals of 16 second timer arrangements DREG1 to DREG 16 and by the outputs of 16 first timer circuits M1 to M16 which are controlled by respective ones of the second timer arrangements, such as M1 by DREG1 and M16 by DREG16.

IN interworks with an address checking arrangement CH which controls DREG1 to DREG16 and is controlled by TSM. CH also interworks with a buffer arrangement GBUF and generates the signal G which can also be generated by GBUF.

The working of this embodiment is relatively similar to that of the first described one which is shown in Fig. 2. However, as will become clear from the following, they differ in that in the first embodiment second packets are inhibited from being sent when due to the sending of the grant packets, reflected first packets could adversely affect the receipt of these second packets in a substation, whilst in the second embodiment the second packets are always sent, and the grant packets are inhibited from being sent if as a result of sending them, reflections of resulting first information packets could be received at the same time at the destination substation as the second information packets.

The timer arrangement formed by DREG1 to DREG16 and M1 to M16 correspond to the combination of SC11 to SC1642 and FC1 to FC16 of the second embodiment respectively.

To be noted that in this second embodiment the second timer circuits are realized by means of not shown shift registers.

IN corresponds to IC, CH to AC and GBUF to PB1 to PB16.

Following is with reference to Fig. 3 a description of the working of this second embodiment of TTM.

Whenever an information packet is issued by MU, its destination address is checked. Supposing the packet is intended for SS16, a 1 bit is applied to the input of R16, whilst a 0 bit is applied to the inputs of the other shift registers, and the packet is buffered in SBUF where it is delayed over a time interval Dmax equal to the greatest one of the time intervals elapsing for the different substations SS1 to SS16 between the receipt of a grant packet and the last instant at which a resulting reflected first packet may be received. These time intervals include the equalization delay and the processing delay of the subject substation. The reason for delaying an information packet over this time interval is to avoid that after the sending of a grant packet an information packet consequently issued by MU would collide with a reflected first information packet resulting from that grant packet. Once Dmax has elapsed, the information packet is passed to MTR as the signal I and can then without danger for collision be sent to the destination substation as will become clear from the following explanation wherein the transmission delay between the main station and SS16 is supposed to be zero, this transmission delay being anyhow the same for the first and second information packets so that it has not to be taken into account.

Supposing the moment at which an information packet for SS16 leaves SBUF and reaches SS16 is t1, then grant packets may no longer be sent to SS16 from the moment t1-D16-trefl to t1-D16, where D16 is equal to the time interval between the receipt of a grant packet by SS16 and the subsequent sending of a first information signal and trefl is equal to the time interval during which reflected first information signals can be received. Indeed, a grant packet which would be sent within this interval would cause reflected first packets arriving at SS16 together with the second information packet transmitted at t1. This packet has entered SBUF at a moment t1-Dmax. As a result, the length of the shift register R16 in which the corresponding bit 1 is shifted one position with each clock pulse of CLK has to correspond to t1-D16-(t1-Dmax) = Dmax-D16, and the last part of the shift register connected to OR16, the output of which has to be 1 as long as no grant signal may be sent to SS16, has to correspond to t1-D16-(t1-D16-trefl) = trefl, so that the output signal of R16 equals 0 as long as a grant packet may be sent and equals 1 as long as such a packet must be buffered..

The output signal of OR16 is used to set a corresponding status bit of SS16 in IN. This bit is also set and reset by the timer arrangement DREG16 and M16 respectively in the same way as described in the first arrangement of Fig. 2 for SC161 to SC1642 and FC16, i.e. each time a grant packet is transmitted to MTR, this is indicated to DREG16 which starts a second time interval, when this interval elapses M16 is started and the status of SS16 in IN is set to busy, when the second time interval elapses for M16 the status bit is set to free. Thus the status bit is busy as long as a sent second information packet can arrive at SS16 and as long as a grant packet received by SS16 can result in a reflected first information packet.

Whenever TSM passes a grant packet to CH for transmission, this packet is stored in a (not shown) internal buffer thereof. CH includes an internal clock (also not shown) at the internal rate of which grant packets to be transmitted are passed to MTR as signal G provided the status of the destination subscriber is free. At each clock pulse of the internal clock, CH checks whether packets are stored in GBUF. When this is the case a packet is retrieved and passed to MTR. When no packets are stored in GBUF, the packet stored in the internal buffer, when there is such a packet present, is passed to MTR. MTR then transmits at the rate of a transmission clock (not shown) the thus retrieved grant packet, together with a first information packet if one is available, to the destination substation.

To be noted that the above description of the working of the two embodiments, which is by way of example related to SS16, is equally applicable to the other substations.

In the above described embodiments, no second information packets, and also no grant packets can arrive at a substation as long as there can be reflection of first information packets sent by that substation, arriving at the latter station. Thus, degradation of the received second information packets and of grant packets due to reflections is avoided.

To be noted that the above described transmission system can equally well be applied to avoid the adverse effect of crosstalk between a substation transmitter and the corresponding substation receiver, or of a combination of crosstalk and reflections, resulting from the transmission of first information packets by this transmitter.

While the principles of the invention have been described above in connection with specific apparatus, it is to be clearly understood that this description is made only by way of example and not as a limitation on the scope of the invention.

**Claims**

1. Transmission system including a main station (MS) and a plurality of substations (SS1, .., SS16) which are each coupled to said main station via a respective individual link (l1/l16) and a common link (lc) and wherein first and second information packets are transmitted from substation transmitters (STR) to a main station receiver (MREC) and from a main station transmitter (MTR) to substation receivers (SREC) respectively, characterized in that said main station (MS) includes a transmission timer means (TTM) to time the operation of said main station transmitter (MTR) and of each of said substation transmitters (STR) to avoid concurrent receipt by said substation receiver (SREC) of said second information packets transmitted thereto and of disturbing packets resulting from said first information packets transmitted by a corresponding one of said substation transmitters (STR).

2. Transmission system according to claim 1, characterized in that said disturbing packets are constituted by reflected first information packets resulting from said first information packets transmitted by said corresponding substation transmitter (STR) and reflected to said substation receiver (SREC) during their transmission to said main station (MS) and which thereby disturb the receipt of said second information packets by said subscriber receiver.

3. Transmission system according to claim 1, characterized in that said disturbing packets result from relatively important crosstalk between said corresponding subscriber transmitter (STR) and said subscriber receiver (SREC) upon transmission of said first information packets from said corresponding subscriber transmitter to said main station (MS).

4. Transmission system according to claim 1, characterized in that each of said substation transmitters (STR) is able to transmit said first information packets in dedicated time slots and that said main station (MS) includes a management module (TSM) which controls said transmission timer means and is able to dynamically allocate said dedicated time slots to each of said substations (SS1/SS16), said management module generating grant packets indicative of said dedicated time slots and supplying said grant packets to said main station transmitter (MTR) which transmits them to said substations to inform them about the time slots allocated.

5. Transmission system according to claim 4, characterized in that said transmission timer means (TTM) includes for each of said substations (SS1, ..., SS16) :
   - a timer circuit (FC1/FC16) to indicate time intervals during which said substation (SS1/SS16) may receive said disturbing packets; and
   - an inhibiting means (IC) controlled by said timer circuit to inhibit the operation of said main station transmitter (MTR) so as to prevent second information packets from reaching said substation during said time intervals.

6. Transmission system according to claim 5, characterized in that said transmission timer means (TTM) further includes for each of said substations (SS1/SS16) a plurality of second timer circuits (SC11, .., SC142/SC161, .., SC1642) each able to indicate second time intervals elapsing between the receipt of said grant packets by the receiver (SREC) of said substation and the possible subsequent sending of a said first information packet by the transmitter (STR) of said substation, said second timer circuits being controlled by a control module (CM) connected to said management module (TSM) to start each in turn a said second time interval, a said second time interval being started each time a said grant packet is sent to said substation by said main station transmitter (MTR), and each of said second timer circuits controlling the first mentioned timer circuit for said substation (FC1/FC16) to start a said first mentioned time interval when any said second interval timed by said second timer circuits has elapsed.

7. Transmission system according to claim 6, characterized in that said inhibiting means (IC) includes a status registering means controlled by each of said second timer circuit (SC11, .., SC142/SC161, .., SC1642) for said substation to register a busy status for said substation when a said second time interval has elapsed for said second timer circuit, said status registering means being also controlled by said first timer circuit (FC1/FC16) for said substation to change said busy status in a free status when a said first interval has elapsed for said first timer circuit (FC1/FC16), and said inhibiting means (IC) inhibiting said main station transmitter (MTR) from transmitting second information packets to said substation when the status thereof is said busy status.

8. Transmission system according to claim 7, characterized in that said transmission timer means (TTM) also includes a buffer means (BUF) controlled by said inhibiting means (IC) to buffer second information packets intended for a said substation (SS1/SS16) as long as the latter is in its busy status.

9. Transmission system according to claim 8, characterized in that said grant packets form part of said second information packets.

10. Transmission system according to claim 4, characterized in that said transmission timer means (TTM) includes for each of said substations (SS1/SS16) :
   - a timer circuit (M1/M16) to indicate time intervals during which said substation (SS1/SS16) may receive said disturbing packets;
   - a register arrangement (SBUF, R1/R16) for delaying said second information packets during a first predetermined time interval prior to transmission;
   - a control means (OR1/OR16) connected to said register circuit (R1/R16), to generate a control signal which is active when a grant packet may be transmitted, said control signal being active during a second predetermined time interval ; and
   - an inhibiting means (IN) controlled by said control signal and by said timer circuit to inhibit the operation of said main station transmitter (MTR) so as to prevent grant packets to be sent to said substation as long as disturbing packets resulting from the receipt by said substation of a said grant signal might concur with second information packets destined for said substation upon receipt thereof by said substation.

11. Transmission system according to claim 10, characterized in that said transmission timer means (TTM) further includes for each of said substations (SS1/SS16) a second timer circuit (DREG1/DREG16) to indicate second time intervals elapsing between the receipt of said grant packets by the receiver (SREC) of said substation and the possible subsequent sending of a said first information packet by the transmitter (STR) of said substation, said second timer circuit being controlled by a control module (CH) connected to said management module (TSM) to start a said second time interval each time a said grant packet is sent to said substation by said main station transmitter (MTR), and said second timer circuit controlling the first mentioned timer circuit for said substation (M1/M16) to start a said first mentioned time interval when any said second time interval timed by said second timer circuits has elapsed.

12. Transmission system according to claim 11, characterized in that said inhibiting means (IN) includes a status registering means controlled by said second timer circuit (DREG1/DREG16) for said substation to register a busy status for said substation when a said second time interval has elapsed for said second timer circuit, and controlled by said first timer circuit (M1/M16) for said substation to change said busy status in a free status when a said first interval has elapsed for said first timer circuit, said inhibiting circuit (IN) inhibiting the operation of said main station transmitter (MTR) so as to inhibit transmission of grant packets to said substation when its status is said busy status.

13. Transmission system according to claim 11, characterized in that said transmission timer means additionally includes a buffering means (GBUF) controlled by said inhibiting means (IN) to buffer said grant packets prior to transmission.

14. Transmission system according to claim 11, characterized in that said first predetermined time interval corresponds to the maximum of the sums of said first and said second time intervals for said substations.

15. Transmission system according to claim 11, characterized in that said second predetermined time interval corresponds to said first time interval for said substation.

16. Transmission system according to any of the previous claims, characterized in that said transmission system is an optical transmission system.

FIG.1

EP 0 652 655 A1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X<br>Y | US-A-4 720 827 (HIDEKI KANAJI)<br>* column 2, line 18 - column 3, line 20 *<br>* column 6, line 24 - column 8, line 44 *<br>* figure 8 *<br>--- | 1-3,16<br>4-6,10 | H04J3/06<br>H04J14/08 |
| D,Y | EP-A-0 544 975 (ALCATEL NV.)<br>* column 2, line 50 - column 6, line 16 *<br>--- | 4-6 | |
| Y | EP-A-0 460 398 (SIEMENS AKTIENGESELLSCHAFT)<br>* column 2, line 24 - column 4, line 2 *<br>* column 5, line 17 - line 35 *<br>* column 6, line 24 - line 42 *<br>* column 9, line 14 - column 10, line 17 *<br>--- | 10 | |
| A | PROCEEDINGS IEEE INTERNATIONAL CONFERENCE ON COMMUNICATIONS,<br>vol.2, 23 June 1991, DENVER (US)<br>pages 899 - 902, XP269717<br>WILIAM A. WEEKS 'Analysis of reflection components in passive optical networks.'<br>* page 900, column 1, line 18 - line 25 *<br>* page 901, column 1, line 17 - line 20 *<br>----- | 3 | TECHNICAL FIELDS SEARCHED (Int.Cl.6)<br><br>H04J<br>H04B |

The present search report has been drawn up for all claims

| Place of search | Date of completion of the search | Examiner |
|---|---|---|
| THE HAGUE | 8 April 1994 | van den Berg, J.G.J. |

EPO FORM 1503 03.82 (P04C01)